# EUROPEAN PATENT SPECIFICATION

(11) **EP 4 319 605 B1**
(45) Date of publication and mention of the grant of the patent: **09.04.2025**
(21) Application number: 22725859.7
(22) Date of filing: 27.04.2022
(51) Int. Cl.: A47J 31/44, A47J 43/046

(54) **MILK FROTHING DEVICE AND COFFEE MACHINE HAVING SAID MILK FROTHING DEVICE**
MILCHAUFSCHÄUMVORRICHTUNG UND KAFFEEMASCHINE MIT DIESER MILCHAUFSCHÄUMVORRICHTUNG
DISPOSITIF DE MOUSSAGE DE LAIT ET MACHINE À CAFÉ COMPORTANT LEDIT DISPOSITIF DE MOUSSAGE DE LAIT

(30) Priority: 24.05.2021 IT 202100013451
(43) Date of publication of application: 14.02.2024
(73) Proprietor: De' Longhi Appliances S.r.l., 31100 Treviso (IT)
(72) Inventor: ROSETTA, Simone, 31100 Treviso (IT); PANCIERA, Antonio, 31100 Treviso (IT); FLORIAN, Paolo, 31100 Treviso (IT)
(74) Representative: Rapisardi, Mariacristina
(86) International application number: PCT/EP2022/061164
(87) International publication number: WO 2022/248146

(56) References cited:
- CN-A- 107 920 683
- US-B2- 7 475 628
- US-B2- 9 107 533

## Description

The present invention relates to a milk frothing device and to a coffee machine having said milk frothing device.

Many well-known devices use steam to heat and to foam milk, while other systems use mechanical steam-coupled stirrers to incorporate air into the milk or electrical resistors to heat the milk.

Other Venturi-effect systems suck milk, froth it and heat it directly in the milk container.

None of the existing solutions provides for an easy-to-clean system as milk-wetted components are sometimes difficult to access on all their inner surfaces.

Some existing solutions are particularly inconvenient because they require the frothed milk to be transferred by hand from the milk container to the cup.

In addition, many known devices typically offer the possibility to automatically dispense only a limited range of products in terms of milk quantity, cream grade and temperature of the frothed milk.

Some existing systems allow to expand the range of products dispensed through specific manual operations, but the result is entrusted to personal skill.

CN 1070920 683 B discloses a device for milk frothing, US 7 475 628 B2 discloses a device for dispensing milk and/o milk froth from a container, US 9 107 533 B2 relates to an automatic milk foamer.

The technical task of the present invention is, therefore, to realise a milk frothing device and a coffee machine which obviate the technical drawbacks described above of the prior art.

Within the context of this technical task an aim of the invention is to realise a milk frothing device and a coffee machine that allow dispensing a wide range of products in terms of the quantity of milk dispensed, cream degree and temperature of the frothed milk.

A further aim of the invention is to realise a milk frothing device that is easy to inspect and clean in all its components.

Last but not least, the aim of the invention is to realise a milk frothing device that is extremely convenient to use.

The technical task, as well as these and other purposes, according to the present invention are achieved by realising a milk frothing device, characterised in that it comprises a milk container having at least one bottom, a removable lid for the hermetic closure of the milk container, a support base for supporting the milk container, a conduit for dispensing the frothed milk comprising a portion internal to the container which extends towards said bottom of the container and a portion external to said container having a downward dispensing end for the direct dispensing into a cup, a conduit for the inlet of air into the container, a supplier of compressed air to the air inlet conduit for the ejection of the frothed milk contained in said container through said dispensing conduit, a rotatable mechanical stirrer positioned inside said container, a milk heater, and a means for the activation in rotation of said stirrer housed in said support base.

Advantageously, the frothed milk dispensing conduit has an inner diameter comprised between 8 mm and 20 mm so that the milk cream produced can be dispensed without deteriorating during the passage through the frothed milk dispensing conduit itself.

Advantageously, the invention also discloses a coffee machine having such a milk frothing device.

Advantageously, the support base is positioned in front of a front outer wall of said machine provided with a milk temperature sensor present in the container, a pneumatic connector for connecting said air inlet conduit to said air supplier, and an electrical connection means for connecting said means for the activation in rotation to an electric power supply housed inside said coffee machine.

Advantageously, the coffee machine has a user interface for selecting at least a quantity of dispensed frothed milk, a type of milk and a degree of frothing, a data archive that supplies for the quantity of dispensed frothed milk selected a first association between type of milk and rotation speed of the mechanical stirrer, and a second association between the degree of frothing and the activation time of the mechanical stirrer, and an electronic controller programmed to acquire a selection of at least a quantity of frothed milk dispensed, a type of milk and a degree of frothing and to control the dispensing of a quantity of frothed milk selected by activating said mechanical stirrer with the rotation speed associated with the type of milk selected and for the time associated with the selected degree of frothing.

Advantageously, said electronic controller is programmed to acquire a selection of a temperature of the quantity of frothed milk dispensed, and to control the dispensing of the quantity of frothed milk selected through the activation of said heater until reporting that the temperature selected has been reached by said temperature sensor.

Other features of the present invention are further defined in the following claims.

Further features and advantages of the invention will more fully emerge from the description of a preferred but not exclusive embodiment of the milk frothing device according to the invention, illustrated by way of non-limiting example in the appended drawings, in which:
figure 1 shows an axonometric diagram of the coffee machine with the device fully installed for direct dispensing into the cup;
figure 2 shows an axonometric diagram of the coffee machine with the milk container removed;
figure 3 in vertical section the milk container with the lid applied;
figure 4 shows the lid removed from the milk container;
figure 5 shows a front-view magnification of the coffee machine area where the magnetic transmission for the rotation of the mechanical stirrer takes place;
figure 6 shows a sectional side elevation diagram of the coffee machine with the milk frothing device fully installed;
figure 7 shows a sectional side elevation diagram of the coffee machine without milk container;
figure 8 shows a sectional side elevation diagram of the coffee machine without milk container and without support base;
figure 9 shows a sectional side elevation diagram of the coffee machine with the milk frothing device fully installed in a second embodiment thereof.

Equivalent parts in the following description will be indicated with the same numerical references.

With reference to the aforementioned figures, a milk frothing device indicated as a whole with reference numeral 1 is shown.

The milk frothing device 1 comprises a support base 5 and a milk container 2 which is positionable on the support base 5.

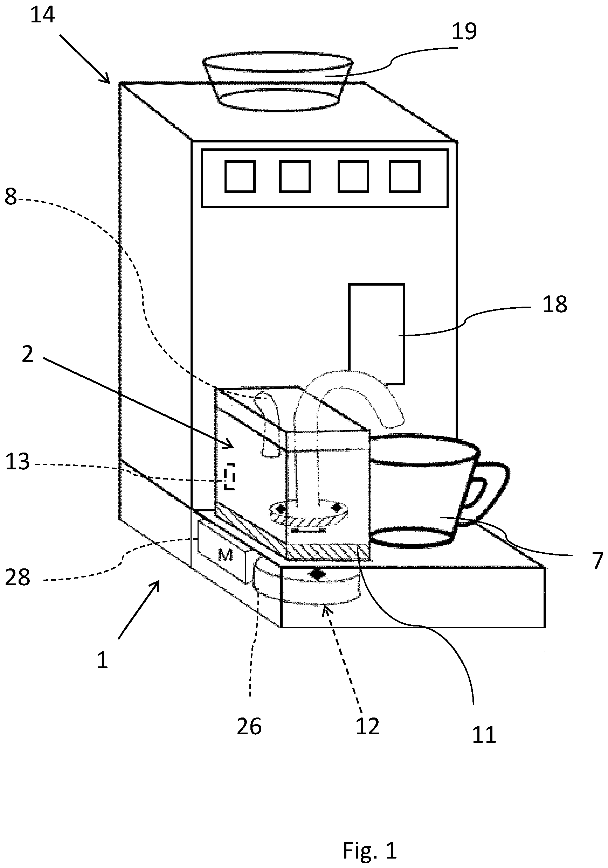

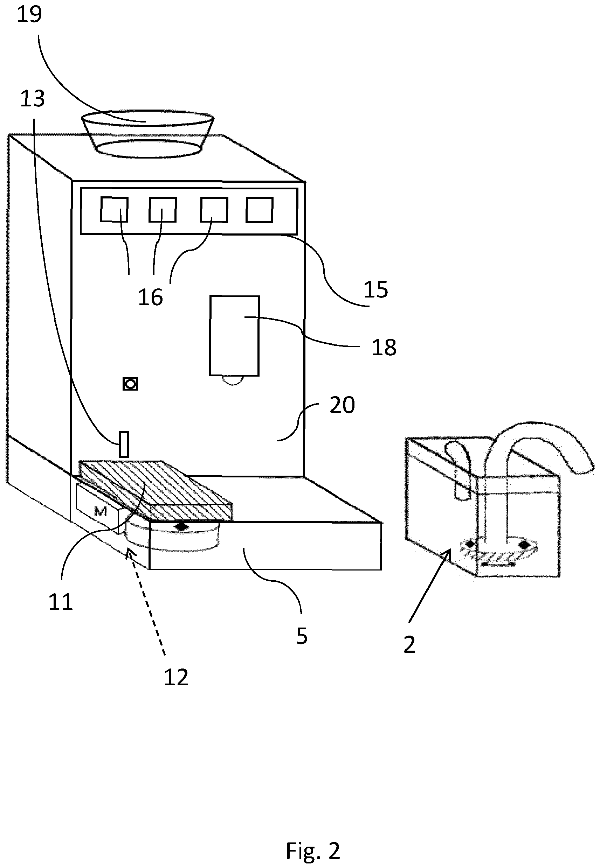

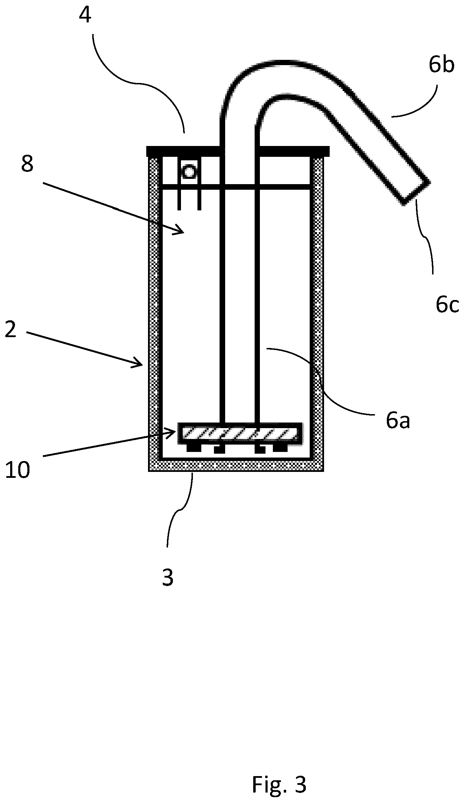

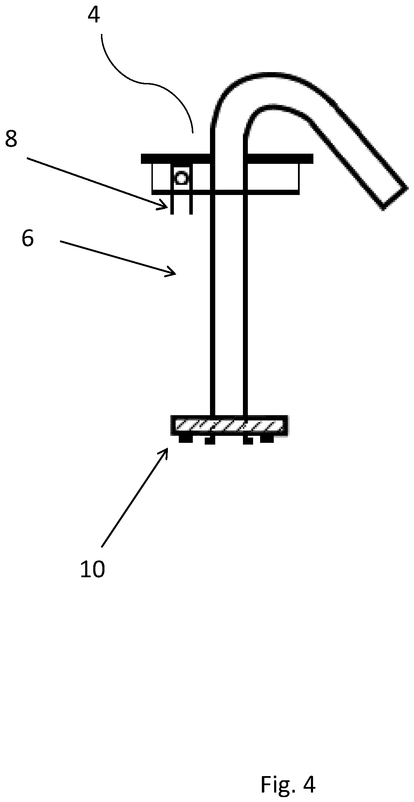

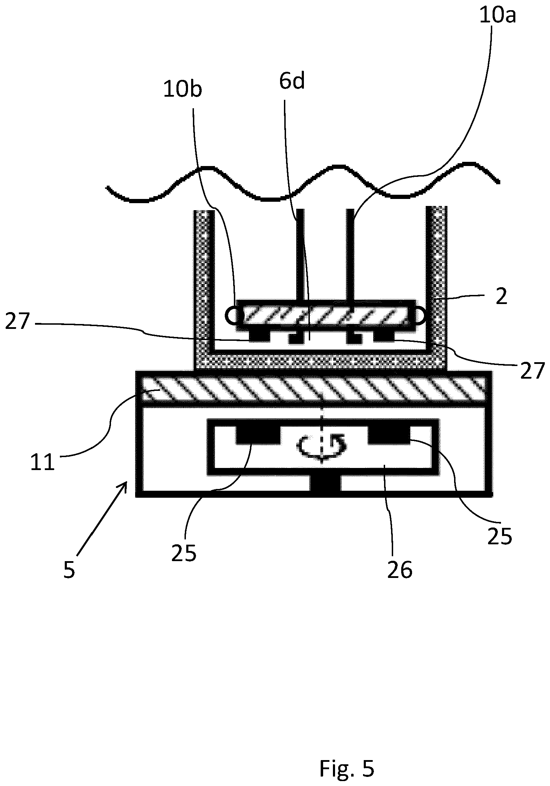

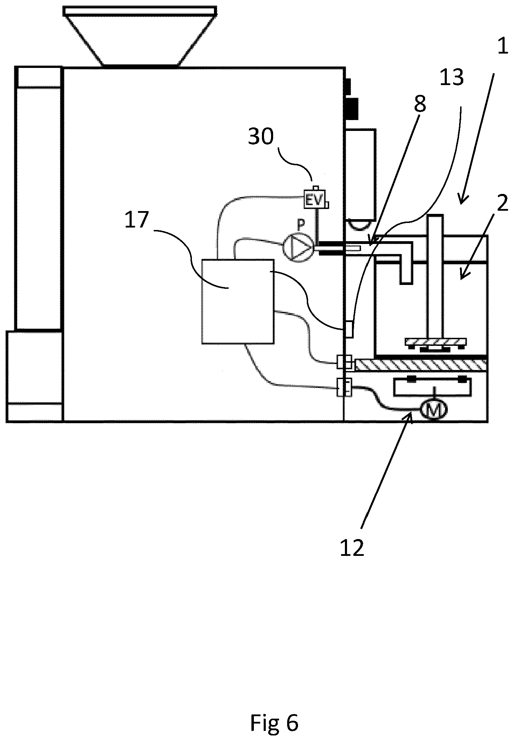

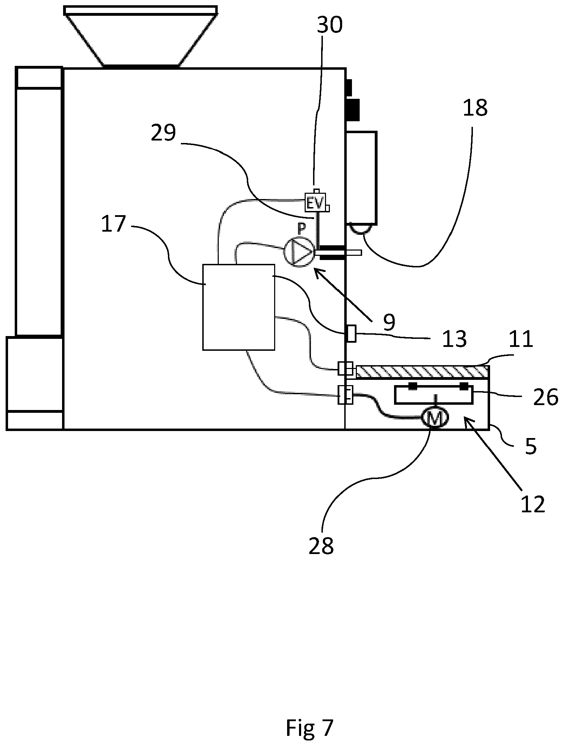

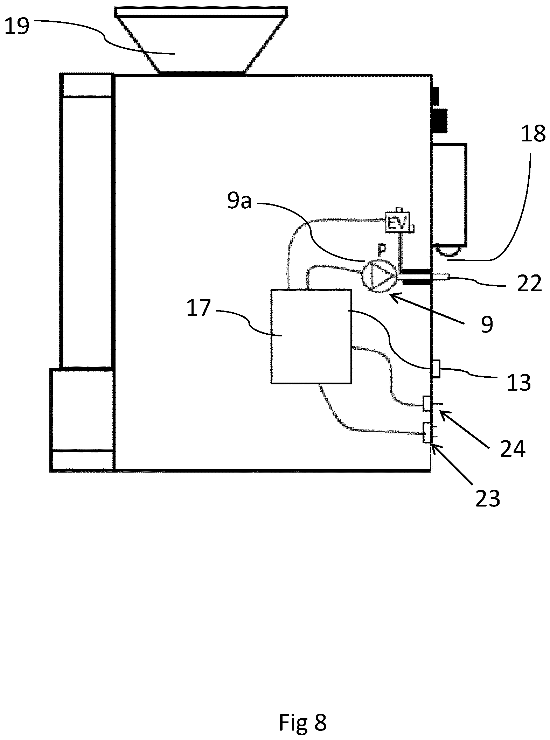

The bottom 3 of the milk container 2 illustrated in figures 1 - 8, for reasons that will be clearer below, is made of non-magnetic thermoconductive metal, for example a stainless steel or aluminium.

The upper mouth of the milk container 2 is hermetically closed by a removable lid 4.

The milk frothing device 1 further comprises a conduit 6 for dispensing the frothed milk comprising a portion 6a internal to the milk container 2 which extends towards the bottom 3 of the milk container 2 and a portion 6b external to the milk container 2 having a downward dispensing end 6c for the direct dispensing into a cup 7.

The milk frothing device 1 further comprises a milk temperature sensor 13, for example an infrared non-contact sensor.

The milk frothing device 1 further comprises a conduit 8 for the inlet of air into the milk container 2 and a supplier 9 of compressed air to the air inlet conduit 8 for the ejection of the frothed milk contained in the milk container 2 through the dispensing conduit 6.

The milk frothing device 1 further comprises a rotatable mechanical stirrer 10 positioned inside the milk container 2 for frothing the milk.

The milk frothing device 1 further comprises a milk heater 2 and a means 12 for the activation in rotation of the mechanical stirrer 10 housed in the support base 5.

The milk frothing device 1 is at least partially made disconnectable from a coffee machine 14.

In the solution illustrated in figures 1-8, the heater comprises an electric heater 11 housed in the support base 5.

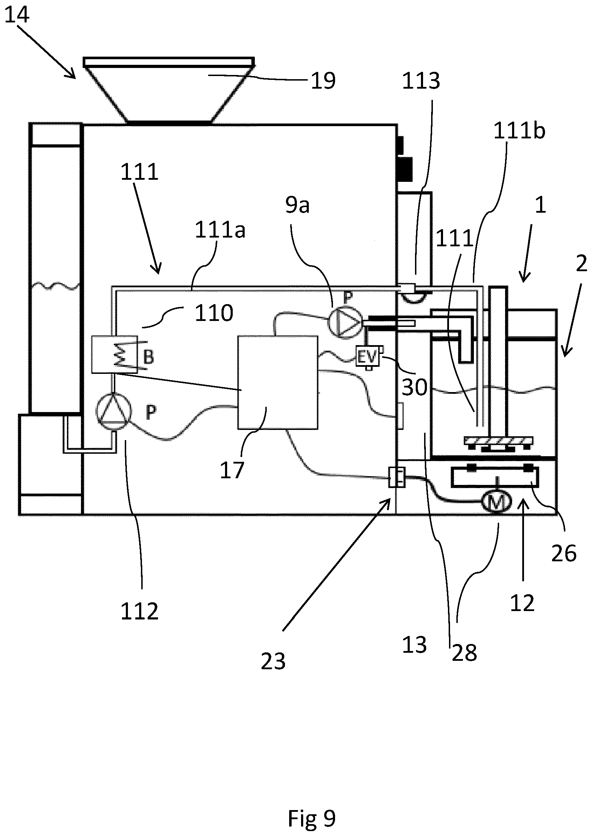

In the solution illustrated in figure 9, instead, the heater comprises a steam generator 110 supplied by a water pump 112 and supplying a supply conduit 111 of the milk container 2. In addition, the steam generator 110 and relative supply pump 112 are housed in the frame of the coffee machine, while the supply conduit 111 of the milk container 2 has a first portion 111a integrated into the coffee machine 14 and a second portion 111b integrated into the lid 4 and has, especially at the front outer wall 20 of the coffee machine 14, a special disconnectable connection means 113 between the two portions 111a, 111b.

Reference is now made again to figures 1 - 9.

The coffee machine 14 has a user interface.

The user interface can be formed by a dashboard positioned on the front outer wall 20 of the coffee machine 14, and include for example a display 15 and selectors 16, for example keys and/or knobs.

The user interface, in addition to or as an alternative to the physical dashboard, may include a data transceiver unit for wireless network, for example a short or long range radio frequency transceiver, adapted to interact with electronic devices of a known type, for example smartphones, provided with a special application for interfacing with the coffee machine 14.

The coffee machine 14 comprises an electronic controller 17, a hydraulic circuit (not shown) for the production of hot water under pressure provided with a pump and a boiler, a brewing unit (not shown) supplied by the hydraulic circuit and connected to an outer coffee dispenser 18 mounted on the front outer wall 20.

Other components housed within the frame of the coffee machine 14 may be provided, for example a steam production circuit (shown for example in figure 9), a grinder (not shown) supplied by a coffee bean loading hopper 19.

The temperature sensor 13 is permanently fixed externally to the front outer wall 20 of the coffee machine 14.

The air supplier 9, comprising for example an air pump 9a, is permanently housed within the frame of the coffee machine 14.

Preferably, the support base 5 is instead disconnectable from the front outer wall 20 of the coffee machine.

In particular, the support base 5 is positioned at the base of the coffee machine 14 in front of the front outer wall 20 of the coffee machine 14.

The front outer wall 20 of the coffee machine 14 supports, in addition to the temperature sensor 13, a pneumatic connector 22 for disconnectable connection of the air inlet conduit 8 to the air supplier 9 and an electrical connection means 23 for disconnectable connection of the means 12 for the activation in rotation to an electric power supply (not shown) housed in the frame of the coffee machine 14.

The lid 4 is removable from the milk container 2 together with the frothed milk dispensing conduit 6 and the mechanical stirrer 10.

The lid 4 supports the frothed milk dispensing conduit 6 and the inner portion 6a of the frothed milk dispensing conduit 6 in turn supports the mechanical stirrer 10 externally in free rotation on itself.

The frothed milk dispensing conduit 6 can be fixed to the lid 4 or be formed as a single piece with the lid 4.

The inner portion 6a of the frothed milk dispensing conduit 6 advantageously acts as a rotation pivot for the mechanical stirrer 10.

The mechanical stirrer 10 has an annular central body 10a and having an inner cylindrical surface conjugated to an outer cylindrical surface of the frothed milk dispensing conduit 6.

The annular central body 10a supports, on its outer perimeter, one or more mechanical stirring elements, for example a series of radial blades or a spiral toroidal whip 10b.

At the lower end the inner portion 6a of the frothed milk dispensing conduit 6 has an outer perimeter flange 6d supporting the mechanical stirrer 10.

At least the lower end portion of the inner portion 6a of the frothed milk dispensing conduit 6 may be deformable, for example by crushing, to allow the mechanical stirrer 10 to be hooked and unhooked.

The inner portion 6a of the frothed milk dispensing conduit 6 extends vertically to provide a vertical axis of rotation to the mechanical stirrer 10.

Preferably the lid 4 is removable from the milk container 2 together with the air inlet conduit 8.

The air inlet conduit 8 can also be fixed or obtained as a single piece with the lid 4.

The milk frothing device 1 includes the magnetic transmission means for transmitting the movement from the activation means 12 to the mechanical stirrer 10.

The activation means 12 comprises a wheel 26 coaxial to the mechanical stirrer 10 and housed in the support base 5, and a drive motor 28 for driving the wheel 26 also housed in the support base 5.

The magnetic transmission means may include permanent magnet blocks 25 fixed along a circumference of the wheel 26, and ferromagnetic blocks 27 fixed along a circumference of same diameter as the mechanical stirrer 10.

The permanent magnet blocks 25 in rotation interact magnetically and drag into rotation the ferromagnetic blocks 27 and consequently the mechanical stirrer 10.

To optimize the dragging force, it is convenient to position the wheel 26 as close as possible to the bottom 3 of the milk container 2.

The milk frothing device 1 also comprises a conduit 29 for connecting the air inlet conduit 8 to the atmospheric environment external to the milk container 2, and valve means 30, for example a solenoid valve, for the opening and closing of the connection conduit 29.

The connection conduit 29, as we will see, remains open when the mechanical stirrer 10 is in operation to prevent the accidental escape of the milk cream through the dispensing conduit 6 before the milk is fully frothed.

It should be noted that the frothed milk dispensing conduit 6 has an inner diameter comprised between 8 mm and 20 mm and there are no construction obstructions to ensure that the milk cream produced does not deteriorate when it is dispensed.

The milk container 2 can be rested on an area of the support base 5 centred above the wheel 26.

The support area of the milk container 2 is located in a laterally staggered position from the external coffee dispenser 18.

The temperature sensor 13 and the pneumatic connector 22 are positioned at a height above the support area of the milk container 2 and the electrical connection means 23 is positioned on the rear side of the support base 5.

The user interface of the coffee machine 14 has at least one selector 16 of a quantity of dispensed frothed milk, at least one selector 16 of a type of milk, at least one selector 16 of a degree of frothing.

The electronic controller 17 is connected, in addition to all the active components of the milk frothing device 1, also to a data archive that supplies for the quantity of dispensed frothed milk selected a first association between type of milk and rotation speed of the mechanical stirrer 10, and a second association between degree of frothing and activation time of the mechanical stirrer 10.

The electronic controller 17 is programmed to acquire through the user interface a selection of at least a quantity of dispensed frothed milk, a type of milk and a degree of frothing and to control the dispensing of the selected quantity of frothed milk by activation of the mechanical stirrer 10 with the rotation speed associated with the selected type of milk and for the time associated with the selected degree of frothing.

In addition, the electronic controller 17 is programmed to acquire, again via the user interface, a selection of a temperature of the quantity of frothed milk dispensed, and to control the activation of the heater until reporting that the selected temperature has been reached by the temperature sensor 13.

Below is a table illustrating an example of a range of products that can be dispensed and selected on request through the user interface.

| **Type of milk** | **Stirrer speed (rpm)** | **Temperatu re range (°C)** | **Cream level setting** | **Frothing time (s)** | **Heating time (s)** | **Dispensin g time (pump activation ) (s)** | **Quantity dispensed (ml)** |
|---|---|---|---|---|---|---|---|
| Uht whole milk | 600 | 3-85 | high - medium - low | 45 - 25 - 15 | 0-180 | 12, 7, 4 | 150-100-50 |
| Uht skimmed milk | 400 | 3-7 or 40-70 | medium - low | 25-15 | 0-120 | 10, 6, 3 | 150-100-50 |
| whole raw milk | 800 | 60-85 | high - medium - low | 45 - 25 - 15 | 0-180 | 11, 8, 5 | 150-100-50 |
| soy | 300 | 3-80 | high - medium - low | 45 - 25 - 15 | 0-165 | 6, 5, 3 | 150-100-50 |
| almond | 400 | 3-70 | medium - low | 25-15 | 0-120 | 7, 4 | 100-50 |
| rice | 1000 | 3-65 | medium - low | 25-15 | 0-110 | 7, 4 | 100-50 |
| milk + flavouring s | 200-1000 | 3-85 | high - medium - low | 10-60 | 0-180 | 20-3 | 200-50 |

The coffee machine 14 allows the automatic dispensing of the recipes into the cup, and allows to reach very low dispensing temperatures, for example of 5°C or very high, for example above 80°C.

The controller 17 advantageously associates the ideal rotation speed, indicated in the data archive, with the selected type of milk.

It is known that the types of milk differ in the content of fats and proteins and other surfactants that affect the formation of the milk cream.

Today, non-dairy milk is also often used and this variety of choice requires greater versatility in adapting the milk cream formation cycle.

For example, whole milk having a higher fat and protein content can be foamed by mechanical stirring at 600 rpm, skimmed milk can be foamed by mechanical stirring at 400 rpm, vegetable milk, depending on the type, can be foamed by mechanical stirring from 300 to 1000 rpm.

The milk frothing device 1 can also be used to dispense milk with special additives and flavourings, such as vanilla or chocolate or strawberry in powder or liquid, added directly into the milk container 2.

The dispensing cycle is as follows.

The user selects the type of milk, quantity, cream degree and temperature of the milk dispensed through the user interface.

The electronic controller 17 obtains from the archive the process execution data for the quantity of dispensed milk selected, in terms of speed of the mechanical stirrer 10, duration of activation of the mechanical stirrer 10, duration of activation of the air pump 9a, while the duration of activation of the heater is defined by the temperature sensor 13 which reports that the selected temperature has been reached.

Reference is now made to the operation of the device illustrated in figures 1 - 8.

Before starting the dispensing cycle, the user electrically connects the support base 5 to the electrical connection means 23, for example by means of electrical plugs of the support base 5 that engage in electrical sockets of the electrical connection means 23.

In this case, the support base also makes the electrical connection of electrical connection means 24 of the electrical heater 11 to the electric power supply internal to the coffee machine.

The user then places the milk container 2 on the support base 5 above the electric heater 11 and connects the air conduit 8 to the compressed air supplier 9.

At this point, the user, via the user interface, controls the start of the dispensing cycle.

The cycle starts with the air solenoid valve 30 open and the air pump 9a deactivated.

The controller 17 controls the activation of the mechanical stirrer 10 at the rotation speed indicated in the data archive and for the duration indicated in the data archive.

If the user selects a milk that is also hot as well as foamed, the controller also controls the activation of the electric heater 11.

At the end of the foaming and upon reaching the selected temperature, the controller 17 controls the deactivation of the mechanical stirrer 10 and respectively of the electric heater 11, and controls the closure of the air solenoid valve 30.

At this point, the electronic controller 17 controls the closure of the air solenoid valve 30 and the activation of the air pump 9a with a duration also indicated in the data archive that preferably also supplies for the quantity of dispensed frothed milk selected a third association between the type of milk and the activation time of the air pump 9a.

With the air solenoid valve 30 closed, the milk container 2 is pressurized by the air pump 9a and the milk foam is forced out of the dispensing conduit 6 towards the cup 7.

The compressed air of only 0.1-0.5 bar in combination with a dispensing conduit 6 with high inner diameter, allows the dispensing directly into the cup 7 without deteriorating the quality of the milk foam as it passes through the dispensing conduit 6.

It is also possible to exclude the control of the dispensing cycle based on the data present in the data archive and proceed to a custom selection of the parameters of the dispensing cycle.

The operation of the device illustrated in figure 9 differs substantially in that the heating of the milk is made with the steam produced by the generator 110. During the heating step in which the steam is produced, the solenoid valve 30 remains open to ensure the connection of the inside of the milk container 2 with the external atmospheric environment and the air pump 9a remains deactivated.

## Claims

1. A milk frothing device (1), comprising a milk container (2) having at least one bottom (3), a support base (5) for supporting the milk container (2), a conduit (6) for dispensing the frothed milk comprising a portion (6a) internal to the milk container (2) which extends towards said bottom (3) of the milk container (2) and a portion (6b) external to said milk container (2) having a downward dispensing end (6c) for the direct dispensing into a cup (7), a conduit (8) for the inlet of air into the milk container (2), a rotatable mechanical stirrer (10) positioned inside said milk container (2) for frothing the milk, a milk heater, and a means (12) for the activation in rotation of said mechanical stirrer (10) housed in said support base (5), **characterized in that** it comprises a removable lid (4) for the hermetic closure of said milk container (2), and a supplier (9) of compressed air to said air inlet conduit (8) for the ejection of the frothed milk contained in said milk container (2) through said dispensing conduit (6).

2. The milk frothing device (1) according to claim 1, **characterised in that** said frothed milk dispensing conduit (6) has an inner diameter comprised between 8 mm and 20 mm.

3. The milk frothing device (1) according to any one of the preceding claims, **characterised in that** said bottom (3) is made of metal material and said heater comprises an electric heater (11) housed in said support base (5).

4. The milk frothing device (1) according to any one of claims 1 and 2, **characterised in that** said heater comprises a steam generator (110) having in delivery a supply conduit (111) of the said milk container (2).

5. The milk frothing device (1) according to any one of the preceding claims, **characterised in that** said lid (4) is removable from said milk container (2) together with said frothed milk dispensing conduit (6) and said mechanical stirrer (10).

6. The milk frothing device (1) according to any one of the preceding claims, **characterised in that** said lid (4) supports said frothed milk dispensing conduit (6) and said internal portion (6a) of said frothed milk dispensing conduit (6) externally supports said mechanical stirrer (10) in free rotation on itself.

7. The milk frothing device (1) according to any one of the preceding claims, **characterised in that** said lid (4) supports said air inlet conduit (8).

8. The milk frothing device (1) according to any one of the preceding claims, **characterised in that** it comprises a magnetic transmission means for transmitting the movement from said activation means (12) to said mechanical stirrer (10).

9. The milk frothing device (1) according to any one of the preceding claims, **characterised in that** it comprises a milk temperature sensor (13).

10. The milk frothing device (1) according to any one of the preceding claims, **characterised in that** it comprises a conduit (29) for connecting the air inlet conduit (8) to the atmospheric environment external to said container, and a valve means (30) for the opening and closing of said connection conduit (29).

11. A coffee machine (14) having a milk frothing device (1) according to any one of the preceding claims.

12. The coffee machine (14) according to the preceding claim, **characterised in that** said air supplier (9) comprises an air pump (9a) housed inside said coffee machine (14).

13. The coffee machine (14) according to the preceding claim, **characterised in that** said support base (5) is positioned in front of a front outer wall (20) of said coffee machine (14) provided with said temperature sensor (13), a pneumatic connector (22) for connecting said air inlet conduit (8) to said air supplier (9), and an electrical connection means (23) for connecting said activation means (12) to an electric power supply housed inside said coffee machine (14).

14. The coffee machine (14) according to any one of claims 11 to 13, **characterised in that** it has a user interface for selecting at least a quantity of dispensed frothed milk, a type of milk and a degree of frothing, a data archive that supplies for the quantity of dispensed frothed milk selected a first association between milk type and rotation speed of the mechanical stirrer, and a second association between the degree of frothing and the activation time of the mechanical stirrer, and an electronic controller (17) programmed to acquire a selection of at least a quantity of frothed milk dispensed, a type of milk and a degree of frothing and to control the dispensing of a quantity of frothed milk selected by the activation of said mechanical stirrer (10) with the rotation speed associated with the type of milk selected and for a duration associated with the selected degree of frothing.

15. The coffee machine (14) according to the preceding claim, **characterised in that** said electronic controller (17) is programmed to acquire a selection of a temperature of the quantity of frothed milk dispensed, and to control the dispensing of the quantity of frothed milk selected through the activation of said heater until reporting that the temperature selected has been reached by said temperature sensor (13).

## Patentansprüche

1. Eine Milchschaumvorrichtung (1), umfassend einen Milchbehälter (2) mit mindestens einem Boden (3), eine Trägerbasis (5) zur Unterstützung des Milchbehälters (2), eine Leitung (6) zur Ausgabe des aufgeschäumten Milchschaums, die einen im Milchbehälter (2) befindlichen Abschnitt (6a) aufweist, der sich in Richtung des Bodens (3) des Milchbehälters (2) erstreckt, und einen außerhalb des Milchbehälters (2) befindlichen Abschnitt (6b) mit einem nach unten gerichteten Auslassende (6c) zur direkten Ausgabe in eine Tasse (7), eine Leitung (8) für die Lufteinführung in den Milchbehälter (2), einen rotierbaren mechanischen Rührer (10), der sich im Milchbehälter (2) befindet und die Milch aufschäumt, eine Milchheizung sowie ein Mittel (12) zur Aktivierung der Rotation des mechanischen Rührers (10), das in der Trägerbasis (5) untergebracht ist, **dadurch gekennzeichnet, dass** sie einen abnehmbaren Deckel (4) zur hermetischen Verschließung des Milchbehälters (2) sowie eine Druckluftzufuhr (9) zur Luftleitung (8) umfasst, um den in dem Milchbehälter (2) enthaltenen aufgeschäumten Milchschaum durch die Ausgabeleitung (6) auszustoßen.

2. Die Milchschaumvorrichtung (1) nach Anspruch 1, **dadurch gekennzeichnet, dass** die Ausgabeleitung (6) für den aufgeschäumten Milchschaum einen Innendurchmesser zwischen 8 mm und 20 mm aufweist.

3. Die Milchschaumvorrichtung (1) nach einem der vorhergehenden Ansprüche, **dadurch gekennzeichnet, dass** der Boden (3) aus Metall besteht und die Heizung ein elektrisches Heizelement (11) umfasst, das in der Trägerbasis (5) untergebracht ist.

4. Die Milchschaumvorrichtung (1) nach einem der Ansprüche 1 oder 2, **dadurch gekennzeichnet, dass** die Heizung einen Dampferzeuger (110) mit einer Zuführleitung (111) für den Milchbehälter (2) umfasst.

5. Die Milchschaumvorrichtung (1) nach einem der vorhergehenden Ansprüche, **dadurch gekennzeichnet, dass** der Deckel (4) zusammen mit der Ausgabeleitung (6) für den aufgeschäumten Milchschaum und dem mechanischen Rührer (10) vom Milchbehälter (2) abnehmbar ist.

6. Die Milchschaumvorrichtung (1) nach einem der vorhergehenden Ansprüche, **dadurch gekennzeichnet, dass** der Deckel (4) die Ausgabeleitung (6) für den aufgeschäumten Milchschaum trägt und dass der innere Abschnitt (6a) dieser Ausgabeleitung (6) den mechanischen Rührer (10) frei rotierbar an sich außen liegend unterstützt.

7. Die Milchschaumvorrichtung (1) nach einem der vorhergehenden Ansprüche, **dadurch gekennzeichnet, dass** der Deckel (4) die Lufteinlassleitung (8) trägt.

8. Die Milchschaumvorrichtung (1) nach einem der vorhergehenden Ansprüche, **dadurch gekennzeichnet, dass** sie ein magnetisches Übertragungsmittel zur Übertragung der Bewegung von dem Aktivierungsmittel (12) auf den mechanischen Rührer (10) umfasst.

9. Die Milchschaumvorrichtung (1) nach einem der vorhergehenden Ansprüche, **dadurch gekennzeichnet, dass** sie einen Milchtemperatursensor (13) umfasst.

10. Die Milchschaumvorrichtung (1) nach einem der vorhergehenden Ansprüche, **dadurch gekennzeichnet, dass** sie eine Leitung (29) umfasst, die die Lufteinlassleitung (8) mit der äußeren atmosphärischen Umgebung verbindet, sowie ein Ventilmittel (30) zur Öffnung und Schließung dieser Verbindungsleitung (29).

11. Eine Kaffeemaschine (14) mit einer Milchschaumvorrichtung (1) nach einem der vorhergehenden Ansprüche.

12. Die Kaffeemaschine (14) nach dem vorhergehenden Anspruch, **dadurch gekennzeichnet, dass** die Luftzufuhr (9) eine in der Kaffeemaschine (14) untergebrachte Luftpumpe (9a) umfasst.

13. Die Kaffeemaschine (14) nach dem vorhergehenden Anspruch, **dadurch gekennzeichnet, dass** die Trägerbasis (5) vor einer vorderen äußeren Wand (20) der Kaffeemaschine (14) positioniert ist, die mit dem Temperatursensor (13), einem pneumatischen Anschluss (22) zur Verbindung der Lufteinlassleitung (8) mit der Luftzufuhr (9) und einem elektrischen Anschlussmittel (23) zur Verbindung des Aktivierungsmittels (12) mit einer in der Kaffeemaschine (14) untergebrachten Stromversorgung ausgestattet ist.

14. Die Kaffeemaschine (14) nach einem der Ansprüche 11 bis 13, **dadurch gekennzeichnet, dass** sie eine Benutzeroberfläche zur Auswahl mindestens einer Menge des ausgegebenen aufgeschäumten Milchschaums, einer Milchart und eines Aufschäumgrades aufweist, eine Datenbank, die für die ausgewählte Menge des ausgegebenen aufgeschäumten Milchschaums eine erste Zuordnung zwischen Milchart und Drehzahl des mechanischen Rührers sowie eine zweite Zuordnung zwischen Aufschäumgrad und Aktivierungszeit des mechanischen Rührers liefert, und einen elektronischen Regler (17), der programmiert ist, um eine Auswahl mindestens einer Menge des ausgegebenen aufgeschäumten Milchschaums, einer Milchart und eines Aufschäumgrades zu erfassen und die Ausgabe einer ausgewählten Menge aufgeschäumten Milchschaums durch Aktivierung des mechanischen Rührers (10) mit der der ausgewählten Milchart zugeordneten Drehzahl und für eine der ausgewählten Aufschäumstufe entsprechende Dauer zu steuern.

15. Die Kaffeemaschine (14) nach dem vorhergehenden Anspruch, **dadurch gekennzeichnet, dass** der elektronische Regler (17) programmiert ist, um eine Auswahl einer Temperatur für die ausgegebene Menge aufgeschäumten Milchschaums zu erfassen und die Ausgabe der ausgewählten Menge aufgeschäumten Milchschaums durch Aktivierung der Heizung zu steuern, bis der Temperatursensor (13) meldet, dass die ausgewählte Temperatur erreicht wurde.

## Revendications

1. Un dispositif de moussage du lait (1), comprenant un récipient à lait (2) ayant au moins un fond (3), une base de support (5) pour supporter le récipient à lait (2), un conduit (6) pour la distribution du lait moussé comprenant une portion (6a) interne au récipient à lait (2) qui s'étend vers ledit fond (3) du récipient à lait (2) et une portion (6b) externe audit récipient à lait (2) ayant une extrémité de distribution orientée vers le bas (6c) pour une distribution directe dans une tasse (7), un conduit (8) pour l'entrée d'air dans le récipient à lait (2), un agitateur mécanique rotatif (10) positionné à l'intérieur dudit récipient à lait (2) pour mousser le lait, un dispositif de chauffage du lait, et un moyen (12) d'activation en rotation dudit agitateur mécanique (10) logé dans ladite base de support (5), **caractérisé en ce qu'**il comprend un couvercle amovible (4) pour la fermeture hermétique dudit récipient à lait (2), ainsi qu'un dispositif d'alimentation en air comprimé (9) vers ledit conduit d'entrée d'air (8) pour l'éjection du lait moussé contenu dans ledit récipient à lait (2) à travers ledit conduit de distribution (6).

2. Le dispositif de moussage du lait (1) selon la revendication 1, **caractérisé en ce que** ledit conduit de distribution (6) du lait moussé a un diamètre interne compris entre 8 mm et 20 mm.

3. Le dispositif de moussage du lait (1) selon l'une quelconque des revendications précédentes, **caractérisé en ce que** ledit fond (3) est constitué d'un matériau métallique et **en ce que** le dispositif de chauffage comprend un élément chauffant électrique (11) logé dans ladite base de support (5).

4. Le dispositif de moussage du lait (1) selon l'une quelconque des revendications 1 et 2, **caractérisé en ce que** ledit dispositif de chauffage comprend un générateur de vapeur (110) ayant en sortie un conduit d'alimentation (111) dudit récipient à lait (2).

5. Le dispositif de moussage du lait (1) selon l'une quelconque des revendications précédentes, **caractérisé en ce que** ledit couvercle (4) est amovible dudit récipient à lait (2) avec ledit conduit de distribution (6) du lait moussé et ledit agitateur mécanique (10).

6. Le dispositif de moussage du lait (1) selon l'une quelconque des revendications précédentes, **caractérisé en ce que** ledit couvercle (4) supporte ledit conduit de distribution (6) du lait moussé et **en ce que** la portion interne (6a) dudit conduit de distribution (6) supporte extérieurement ledit agitateur mécanique (10) en rotation libre sur lui-même.

7. Le dispositif de moussage du lait (1) selon l'une quelconque des revendications précédentes, **caractérisé en ce que** ledit couvercle (4) supporte ledit conduit d'entrée d'air (8).

8. Le dispositif de moussage du lait (1) selon l'une quelconque des revendications précédentes, **caractérisé en ce qu'**il comprend un moyen de transmission magnétique permettant de transmettre le mouvement dudit moyen d'activation (12) audit agitateur mécanique (10).

9. Le dispositif de moussage du lait (1) selon l'une quelconque des revendications précédentes, **caractérisé en ce qu'**il comprend un capteur de température du lait (13).

10. Le dispositif de moussage du lait (1) selon l'une quelconque des revendications précédentes, **caractérisé en ce qu'**il comprend un conduit (29) reliant le conduit d'entrée d'air (8) à l'environnement atmosphérique extérieur audit récipient, ainsi qu'un moyen de vanne (30) pour l'ouverture et la fermeture dudit conduit de connexion (29).

11. Une machine à café (14) comprenant un dispositif de moussage du lait (1) selon l'une quelconque des revendications précédentes.

12. La machine à café (14) selon la revendication précédente, **caractérisée en ce que** ledit dispositif d'alimentation en air (9) comprend une pompe à air (9a) logée à l'intérieur de ladite machine à café (14).

13. La machine à café (14) selon la revendication précédente, **caractérisée en ce que** ladite base de support (5) est positionnée en face d'une paroi extérieure avant (20) de ladite machine à café (14), ladite paroi étant équipée dudit capteur de température (13), d'un connecteur pneumatique (22) pour relier ledit conduit d'entrée d'air (8) audit dispositif d'alimentation en air (9), et d'un moyen de connexion électrique (23) pour relier ledit moyen d'activation (12) à une alimentation électrique logée à l'intérieur de ladite machine à café (14).

14. La machine à café (14) selon l'une quelconque des revendications 11 à 13, **caractérisée en ce qu'**elle comprend une interface utilisateur permettant de sélectionner au moins une quantité de lait moussé distribuée, un type de lait et un degré de moussage, une base de données fournissant, pour la quantité de lait moussé sélectionnée, une première association entre le type de lait et la vitesse de rotation de l'agitateur mécanique, ainsi qu'une seconde association entre le degré de moussage et le temps d'activation de l'agitateur mécanique, et un contrôleur électronique (17) programmé pour acquérir une sélection d'au moins une quantité de lait moussé distribuée, un type de lait et un degré de moussage et pour contrôler la distribution de la quantité de lait moussé sélectionnée par l'activation dudit agitateur mécanique (10) avec la vitesse de rotation associée au type de lait sélectionné et pour une durée associée au degré de moussage sélectionné.

15. La machine à café (14) selon la revendication précédente, **caractérisée en ce que** ledit contrôleur électronique (17) est programmé pour acquérir une sélection de température de la quantité de lait moussé distribuée, et pour contrôler la distribution de ladite quantité de lait moussé sélectionnée par l'activation du dispositif de chauffage jusqu'à ce que ledit capteur de température (13) signale que la température sélectionnée a été atteinte.
